(19) Europäisches Patentamt / European Patent Office / Office européen des brevets

(11) **EP 1 901 555 A1**

(12) **DEMANDE DE BREVET EUROPEEN**

(43) Date de publication:
**19.03.2008 Bulletin 2008/12**

(51) Int Cl.:
*H04N 7/01* *(2006.01)*    *G06T 3/40* *(2006.01)*

(21) Numéro de dépôt: **07116400.8**

(22) Date de dépôt: **14.09.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **15.09.2006  FR 0608101**

(71) Demandeur: **STMicroelectronics SA**
**92120 Montrouge (FR)**

(72) Inventeurs:
• **Roussel, Jérôme**
  **38000 Grenoble (FR)**
• **Bertolino, Pascal**
  **38000 Grenoble (FR)**
• **Nicolas, Marina**
  **38340 Voreppe (FR)**

(74) Mandataire: **Cabinet Plasseraud**
  **52 rue de la Victoire**
  **75440 Paris Cedex 09 (FR)**

(54)    **Désentrelacement d'images.**

(57)    Une image dans au moins une première et une seconde dimension, comprend L lignes de pixels et C colonnes de pixels. Une ligne de pixels valorisée auxquels sont associés des valeurs d'intensité lumineuse et une ligne de pixels à valoriser auxquels des valeurs sont à associer se succèdent alternativement.

Sur chaque ligne valorisée courante de pixels, on sélectionne des pixels qui vérifient une règle de sélection basée, d'une part, sur des valeurs de pixels de la ligne valorisée courante, et d'autre part, sur des valeurs de la ligne valorisée précédente, et/ou de la ligne valorisée suivante ; et, on détecte des segments de pixels. On obtient ainsi un ensemble de segments relatif à l'image en cours de traitement, dans lequel on crée un graphe de segments en reliant entre eux les segments selon une règle de liaison. Puis, on détermine des valeurs respectives à associer à au moins une partie des pixels des lignes à valoriser par interpolation des segments du graphe selon un chemin du graphe.

FIG.8.

EP 1 901 555 A1

## Description

La présente invention concerne les traitements d'images et plus particulièrement le traitement des images entrelacées. L'entrelacement est une technique de traitement d'images animées qui est destinée à réduire le débit nécessaire pour la transmission d'une séquence d'images en ne transmettant que la moitié des informations relatives à chaque image.

Plus précisément, en règle générale, des valeurs sont associées aux pixels d'une ligne de pixels sur deux dans l'image considérée. Ainsi, à une ligne de pixels valorisée dans laquelle des valeurs sont associées à tous les pixels succède une ligne de pixels à valoriser, dans laquelle des valeurs doivent être déterminées pour être associées aux pixels. Il convient donc, pour traiter une image entrelacée, de déterminer sur la base des valeurs associées aux pixels des lignes de pixels valorisées de l'image, les valeurs à associer aux pixels des autres lignes de pixels de l'image, c'est-à-dire des lignes de pixels à valoriser.

A cet effet, on applique classiquement un algorithme de désentrelacement à réception d'une image entrelacée. Un tel algorithme peut prévoir de déterminer la valeur à associer à un pixel d'une ligne à valoriser, en utilisant la moyenne des valeurs associées aux pixels voisins.

Toutefois, ce type d'algorithme n'est pas adapté pour reconstruire de manière nette les contours d'un objet dans l'image.

Un autre algorithme de désentrelacement connu, appelé E.L.A. (pour 'Edge Line Average') vise à améliorer le rendu des contours sur une image entrelacée. Un algorithme de ce type est généralement basé sur un chemin partiel de l'image à traiter au travers d'une fenêtre de recherche. On définit donc une telle fenêtre centrée sur un pixel pour lequel une valeur à associer doit être déterminée. Puis, on détermine une direction indiquant des pixels voisins dans la fenêtre de recherche qui sont les plus adaptés pour une interpolation en vue de déterminer une valeur à associer à ce pixel central.

Ainsi, en parcourant l'image partiellement, on est en mesure de déterminer des valeurs à associer à tous les pixels de l'image. Le document US 7 023 487 décrit une telle méthode.

Toutefois, une image obtenue après l'application de ce type d'algorithme présente encore parfois une qualité visuelle insuffisante, notamment lorsque l'image représente des parties contrastées qui ont une forme relativement fine, et également lorsqu'un contour fin est orienté selon une direction proche de l'horizontale. Une des conséquences pour l'observateur est un manque de continuité dans le rendu visuel de l'image ainsi traitée.

En outre, un tel algorithme est dépendant de la taille de la fenêtre de recherche utilisée qui limite la direction de reconstruction des contours. D'un autre côté, plus la taille de la fenêtre de recherche est grande, plus le risque d'effectuer une interpolation erronée est élevé. Certaines méthodes basées sur de telles fenêtres de recherche proposent de limiter les risques d'interpolation erronée, mais elles restent complexes et lourdes à mettre en oeuvre.

La présente invention vise à pallier les inconvénients précédemment énoncés.

Un premier aspect de la présente invention propose un Procédé de traitement d'une image suivant au moins une première et une seconde dimension, comprenant L lignes de pixels, où L est un nombre supérieur ou égal à 5, et un nombre C de colonnes de pixels, un pixel étant repéré par une abscisse et une ordonnée dans un référentiel de pixels de l'image;

l'image comprenant des lignes de pixels valorisées, aux pixels de laquelle sont associés des valeurs d'intensité lumineuse, alternées avec des lignes de pixels à valoriser, aux pixels de laquelle des valeurs d'intensité lumineuse sont à associer, le procédé comprenant les étapes suivantes :

/a/ sur chaque ligne de pixels valorisée courante :

- sélectionner des pixels qui vérifient une règle de sélection basée, d'une part, sur des valeurs d'intensité lumineuse associées aux pixels de la ligne de pixels valorisée courante, et d'autre part, sur des valeurs d'intensité lumineuse associées aux pixels de la ligne de pixels valorisée précédente, et/ou de la ligne de pixels valorisée suivante dans l'image ;
- détecter des segments de pixels, chaque segment correspondant à un groupe de pixels sélectionnés contigus, sinon à un unique pixel sélectionné disjoint d'autres pixels éventuellement sélectionnés;

/b/ obtenir un ensemble de segments relatif à l'image en cours de traitement ;
/c/ dans ledit ensemble de segments, créer un graphe de segments en reliant entre eux les segments selon une règle de liaison ;
/d/ déterminer des valeurs d'intensité lumineuse respectives à associer à au moins une partie des pixels des lignes à valoriser par interpolation des valeurs d'intensité lumineuse associées aux pixels des segments du graphe selon un chemin, ou parcours, dudit graphe.

Ainsi, à l'étape /a/, en appliquant une règle de sélection adaptée, on est en mesure de déterminer des zones de l'image dans laquelle la qualité peut être insuffisante, notamment lorsque sont présents des contours fins. En effet, en se basant sur les valeurs d'intensité lumineuse de pixels de trois lignes de pixels valorisées, qui sont la ligne de pixels valorisée courante ainsi que la ligne de pixels valorisée précédente et la ligne de pixels valorisée suivante, on est capable de déterminer les zones de l'image qui présentent un contraste de forme fine.

Puis, on transcrit les informations obtenues à l'étape précédente dans un référentiel de graphe, et on obtient ainsi les valeurs d'intensité lumineuse des pixels à prendre en compte pour réaliser une interpolation et ainsi déterminer des valeurs d'intensité lumineuse respectives à associer aux pixels des lignes à valoriser.

De telles dispositions permettent d'affiner la détermination de valeurs de pixels dans des zones où la qualité peut paraître insuffisante, de manière simple et tout en évitant les inconvénients attachés aux méthodes reposant sur la manipulation d'une fenêtre de recherche.

Dans un mode de réalisation de la présente invention, la règle de sélection vise à déterminer les zones de l'image correspondant à un contour fin et contrasté.

A cet effet, on peut prévoir de déterminer des maxima ou des minima d'intensité lumineuse, ou encore d'intensité lumineuse, selon la direction verticale de l'image.

Ainsi, la règle de sélection peut permettre de sélectionner des pixels correspondant à des maxima d'intensité lumineuse. Dans ce cas, la règle de sélection de pixels peut par exemple conduire à sélectionner les pixels pour lesquels la valeur associée est supérieure à la valeur maximum parmi un ensemble de valeurs comprenant :

- une première valeur correspondant à la somme de la valeur associée au pixel, sur la même colonne, de la ligne de pixels valorisée précédente avec une première valeur seuil ; et
- une seconde valeur correspondant à la somme de la valeur associée au pixel, sur la même colonne, de la ligne de pixels valorisée suivante avec une seconde valeur seuil.

Dans un mode de réalisation de la présente invention, cette règle de sélection peut permettre de sélectionner des pixels correspondant à des minima d'intensité.

On peut par exemple sélectionner les pixels pour lesquels la valeur associée est inférieure à la valeur minimun parmi un ensemble de valeurs comprenant :

- une première valeur correspondant à la différence de la valeur associée au pixel, sur la même colonne, de la ligne de pixels valorisée précédente avec une première valeur seuil ; et
- une seconde valeur correspondant à la différence de la valeur associée au pixel, sur la même colonne, de la ligne de pixels valorisée suivante avec une seconde valeur seuil.

Dans un mode de réalisation de la présente invention, la règle de liaison pour créer un graphe de segments lie un premier segment (S1) et un second segment (S2) si l'équation suivante est vérifiée :

$$D(S1, S2) < \min (L1 + d_{seuil}, L2 + d_{seuil})$$

où D(S1,S2) correspond à la distance euclidienne entre les extrémités les plus proche des premier et second segments ;
où L1 et L2 correspondent aux longueurs respectives des premier et second segments ; et
où $d_{seuil}$ correspond à une valeur seuil de distance.

On peut avantageusement prévoir, entre les étapes /c/ et /d/, d'appliquer une règle de simplification de graphe.

Dans ce cas, la règle de simplification de graphe peut comprendre une étape de suppression de deux liaisons de sortie d'un segment lorsque lesdites deux liaisons de sortie sont situées sur le même côté dudit segment.

La règle de simplification peut également comprendre une étape de suppression d'une liaison de sortie d'un segment lorsque la liaison de sortie est située sur le même côté du segment qu'une liaison d'entrée.

Dans un mode de réalisation de la présente invention, l'étape /d/ est réalisée en mettant en oeuvre les étapes suivantes :

/1/ parcourir le graphe et déterminer un premier segment et un second segment du graphe situés sur des première et seconde lignes de pixels valorisées successives dans l'image ;

/2/ déterminer la longueur d'un segment à interpoler, sur la base des premier et second segments, sur la ligne de pixels à valoriser comprise entre la première et la seconde ligne de pixels valorisée ; et

/3/ déterminer des valeurs respectives à associer aux pixels du segment à interpoler par interpolations respectives des valeurs d'intensité lumineuse associées aux pixels des premier et second segments.

Dans ce cas, à l'étape /2/, on peut déterminer l'ordonnée $Y_{startInt}$ du pixel de début et l'ordonnée $Y_{endInt}$ du pixel de fin du segment à interpoler selon les équations respectivement suivantes :

$$Y_{startInt} = Y_{start1} + \left| \frac{Y_{start2} - Y_{start1}}{2} \right|$$

et

$$Y_{endInt} = Y_{end1} + \left| \frac{Y_{end2} - Y_{end1}}{2} \right|$$

où $Y_{start1}$, $Y_{start2}$, $Y_{end1}$ et $Y_{end2}$ sont respectivement les ordonnées des pixels de début et de fin des premier et second segments.

La valeur d'intensité lumineuse déterminée par interpolation d'un pixel P(i,j) du segment à interpoler sur la ligne à valoriser d'indice i peut alors vérifier l'équation suivante :

$$val(P(i,j)) = \frac{1}{2} val(P(i-1, Y_{start1} + E\left(\frac{j \times L_1}{L_{Int}}\right) + \frac{1}{2} val(P(i+1, Y_{start2} + E\left(\frac{j \times L_2}{L_{Int}}\right)$$

où j est compris entre $Y_{startInt}$ et $Y_{endInt}$ ;
où la fonction E renvoie l'entier le plus proche du nombre passé en argument ; et
où $L_{Int}$ est la longueur du segment à interpoler sur la ligne de pixels à valoriser d'indice i.

On peut aussi prévoir que p pixels précédant le segment à interpoler et s pixels suivants le segment à interpoler sont également interpolés sur la base des valeurs des p pixels précédant les premier et second segments et des s pixels suivant les premier et second segments sur les lignes de pixels valorisées des premier et second segments respectivement.

Ainsi, on est avantageusement en mesure d'homogénéiser le rendu visuel de l'image au voisinage de l'interpolation précédemment réaliser à l'étape /d/.

Un deuxième aspect de la présente invention propose un dispositif de traitement d'image comprenant des moyens adaptés pour mettre en oeuvre un procédé de traitement d'image selon le premier aspect de la présente invention.

Un troisième aspect de la présente invention propose un programme d'ordinateur destiné à être installé dans un dispositif de traitement d'image selon le deuxième aspect de la présente invention, comprenant des instructions aptes à mettre en oeuvre le procédé selon le premier aspect de la présente invention, lors d'une exécution du programme par des moyens de traitement du dispositif de traitement d'image.

L'invention sera également mieux comprise à l'aide des dessins, sur lesquels :

- la figure 1 illustre une image de pixels dans un référentiel de pixels selon un mode de réalisation de la présente invention ;
- la figure 2 illustre les principales étapes d'un procédé de traitement d'image selon un mode de réalisation de la présente invention ;
- la figure 3 illustre une application des principales étapes d'un procédé de traitement d'image selon un mode de réalisation de la présente invention dans un procédé de désentrelacement de l'art antérieur;
- la figure 4 illustre un ensemble de segments selon un procédé de traitement d'image dans un mode de réalisation de la présente invention ;
- les figures 5, 6 et 7 illustrent respectivement des étapes mises en oeuvre pour construire un graphe selon un mode de réalisation de la présente invention ;
- la figure 8 illustre une étape d'interpolation de valeurs de pixels selon un mode de réalisation de la présente invention ;
- la figure 9 illustre dans le contexte des figures 5-7, l'étape d'interpolation décrite ci-dessus en référence à la figure 8 ; et
- la figure 10 illustre une étape d'interpolation complémentaire selon un mode de réalisation de la présente invention.

La présente invention est décrite par la suite dans son application aux images en deux dimensions.

Toutefois, aucune limitation n'est attachée à la dimension de l'image traitée par application d'un procédé selon un mode de réalisation de la présente invention. Il est d'ailleurs aisé de déduire des sections suivantes, une application d'un tel procédé de traitement d'image à des images comprenant un nombre d de dimensions, d étant un nombre entier supérieur à 2.

En outre, aucune limitation n'est attachée à la présente invention en ce qui concerne le codage de l'information associée à un pixel qui est utilisée. En effet, quelque soit le codage utilisé, on prend en compte la valeur d'intensité lumineuse associée à un pixel, c'est-à-dire l'intensité lumineuse qui lui est associée. Cette information d'intensité lumineuse est disponible quelque soit le codage vidéo utilisé.

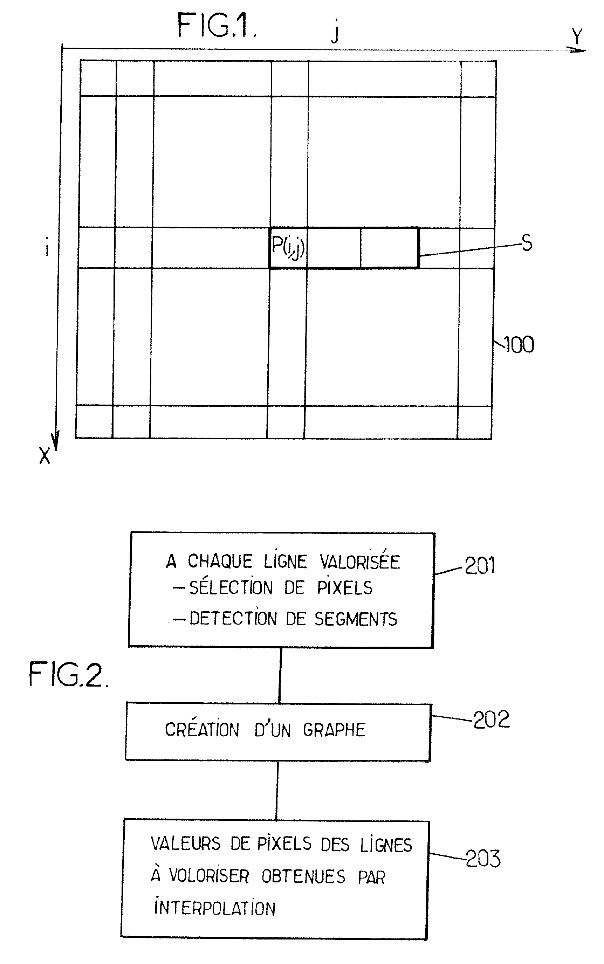

La figure 1 illustre une telle image 100 selon un mode de réalisation de la présente invention, dans laquelle un pixel P(i,j) est positionné selon ses coordonnées dans un référentiel d'axe vertical des abscisses X et d'axe horizontal des ordonnées Y pour une image à deux dimensions.

La présente invention est décrite ci-après dans son application aux images entrelacées qui présentent une ligne de pixels valorisée et une ligne de pixels à valoriser qui se succèdent alternativement. On peut aisément appliquer les principes de la présente invention à d'autres formats qui présenteraient par exemple un autre pourcentage des lignes de pixels valorisées par rapport aux lignes de pixels à valoriser. On peut, par exemple, également facilement appliquer la présente invention à un format de pixels dans lequel ce sont les colonnes valorisées de pixels qui alternent avec les colonnes à valoriser de pixels.

On entend par les termes 'ligne de pixels valorisée', une ligne de pixels dans laquelle des valeurs respectives sont associées aux pixels de la ligne considérée. Puis, on entend par les termes 'lignes de pixels à valoriser', une ligne de pixels dans laquelle des valeurs respectives sont à déterminer et à associer aux pixels de la ligne considérée.

Dans l'exemple considéré par la suite, les lignes de pixels d'indice pair de l'image 100 sont des lignes de pixels valorisées et les lignes de pixels d'indice impair sont des lignes de pixels à valoriser.

La figure 2 illustre les principales étapes d'un procédé de traitement d'image selon un mode de réalisation de la présente invention.

En une étape 201, on parcourt l'image 100 selon les lignes de pixels. Pour chacune des lignes de pixels valorisées, c'est-à-dire pour chacune des lignes d'indice pair, on sélectionne des pixels en appliquant une règle de sélection de pixels qui se base, d'une part, sur les valeurs des pixels de la ligne valorisée courante, et d'autre part sur les valeurs de pixels de la ligne valorisée précédente et/ou les valeurs de pixels de la ligne valorisée suivante. En fait, lorsque la ligne valorisée courante a une ligne valorisée précédente et une ligne valorisée suivante, on prend en compte de préférence les valeurs qui leur sont associées. Lorsque ce n'est pas le cas, par exemple pour la première ou la dernière ligne valorisée de l'image, on ne prend en compte que les valeurs qui sont associées à l'une ou l'autre de ces lignes qui sont disponibles.

Dans un mode de réalisation de la présente invention, on applique une telle règle de sélection en sélectionnant un pixel de la ligne valorisée courante de pixels en fonction de la valeur du pixel de la même colonne, situé sur la ligne de pixels valorisée précédente et de la valeur du pixel de la même colonne, situé sur la ligne de pixels valorisée suivante.

On peut prévoir de souhaiter corriger la qualité de l'image en cours de traitement pour les maxima d'intensité et / ou pour les minima d'intensité lumineuse qui présentent une forme relativement fine. En effet, ces critères correspondent aux parties de l'image qui sont susceptibles de présenter un mauvais rendu.

Dans ce cas, on souhaite donc déterminer les contrastes de luminosité de forme fine.

La règle de sélection, relativement aux maxima d'intensité lumineuse, peut par exemple sélectionner les pixels P(i,j) de la ligne valorisée courante i de pixels auxquels sont associées des valeurs d'intensité lumineuse qui vérifient l'équation suivante :

$$val(P(i, j) \succ Max(val(P(i-2, j) + T1; val(P(i+2, j)) + T2)$$

où la ligne courante d'indice i est une ligne de pixels valorisée,
où T1 et T2 correspondent à des valeurs seuil de contraste.

Dans un mode de réalisation de la présente invention, les valeurs T1 et T2 sont identiques et sont égales à une valeur de l'ordre de 16 exprimée en luminance.

Puis, on parcourt la ligne d'indice i selon toutes les colonnes. Ensuite, on passe à la ligne valorisée suivante, c'est-à-dire la ligne d'indice i+2 pour procéder de même.

A l'issue de cette phase de parcours de l'image, on a déterminé un ensemble de pixels qui répondent à la règle de sélection, c'est-à-dire en l'espèce, qui représentent des maxima d'intensité selon la direction verticale.

La règle de sélection peut également sélectionner les pixels qui présentent des minima d'intensité lumineuse selon la direction verticale. A cet effet, on peut sélectionner les pixels P(i,j) de la ligne valorisée courante de pixels d'indice i, si la valeur d'intensité lumineuse qui leur est associée vérifie l'équation suivante :

$$val(P(i, j) \prec Min(val(P(i - 2, j) - T'1; val(P(i + 2, j)) - T'2)$$

Ensuite, on effectue une étape de détection des segments en regroupant, par lignes de pixels valorisées, les pixels contigus qui ont été sélectionnés. Les pixels sélectionnés qui sont disjoints d'autres pixels sélectionnés forment alors un segment d'un pixel, c'est-à-dire d'une longueur égale à 1.

Puis, à une étape 202, on passe du référentiel de pixels tel que décrit ci-avant à un référentiel de segments, pour ensuite créer un graphe de segments. Plus précisément, chaque segment est identifié dans ce référentiel de segments par des coordonnées qui représentent respectivement l'indice de la ligne de pixels valorisée à laquelle il appartient et l'ordonnée du premier pixel qui le constitue. Il est également identifié par sa longueur. Un graphe de segments est ensuite créé, définissant ainsi un sens de chemin au fil des segments.

Ensuite, à une étape 203, on est en mesure de mettre en oeuvre une étape d'interpolation en parcourant le graphe et en interpolant des segments de lignes de pixels à valoriser qui sont situés entre deux segments consécutifs du graphe. On obtient ainsi des valeurs d'intensité lumineuse à associer aux pixels des segments à interpoler sur la base des valeurs d'intensité lumineuse associées aux pixels des segments du graphe qui 'encadrent' le segment à interpoler.

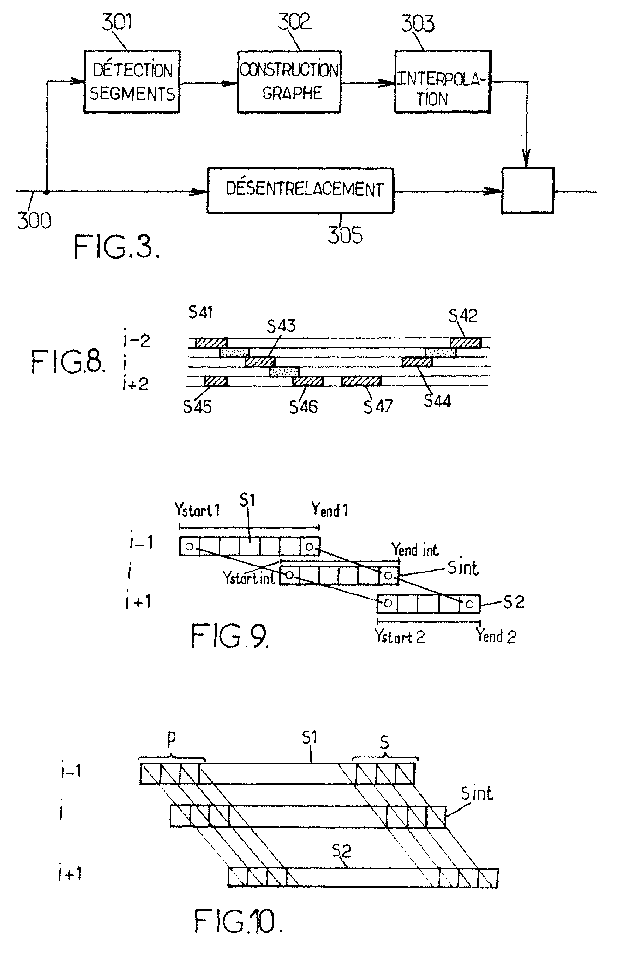

La figure 3 illustre une application des principales étapes d'un procédé de traitement d'image selon un mode de réalisation de la présente invention dans un procédé de désentrelacement de l'art antérieur.

On peut prévoir de déterminer certaines valeurs à associer aux pixels des lignes à valoriser de l'image 100 par l'application d'un procédé selon un mode de réalisation de la présente invention, et de déterminer les autres valeurs à associer aux autres pixels des lignes à valoriser par l'application d'un algorithme de l'art antérieur bien connu de l'homme du métier.

Dans ce contexte, les données relatives à l'image 100 entre par l'entrée 300. Ces données peuvent ensuite être traitées, d'une part, par l'application d'un procédé selon un mode de réalisation de la présente invention, au cours duquel on effectue une détection 301 des segments dans l'image, on construit un graphe 302 de ces segments, puis on procède à l'interpolation 303 des valeurs en correspondance avec le graphe et, d'autre part, par l'application d'un procédé de désentrelacement 305 de l'art antérieur.

Puis, en sortie 306 on peut prévoir, d'une part, d'associer les valeurs déterminées selon le procédé d'un mode de réalisation de la présente invention aux pixels respectifs correspondants et, d'autre part, d'associer les valeurs déterminées par l'application du procédé de désentrelacement de l'art antérieur pour les autres pixels de l'image 100 ainsi traitée.

Par la suite, la présente invention est décrite dans son application aux maxima d'intensité lumineuse. Toutefois, il est aisé d'en déduire une application de la règle de sélection visant à sélectionner les pixels présentant des minima d'intensité.

Lorsque la sélection des pixels est effectuée sur toutes les lignes valorisées de l'image, on détecte, à l'étape /a/ ou étape 201, des segments correspondants. Dans ce contexte, un segment est composé des pixels sélectionnés d'une même ligne qui sont contigus. En outre, un pixel sélectionné isolé sur une ligne valorisée, c'est-à-dire un pixel sélectionné qui n'a pas de voisins, forme également un segment. Grâce à cette étape de détection de segments dans l'image, on est en mesure de passer d'un référentiel de pixels à un référentiel de segments.

A cet effet, un segment ainsi détecté peut être identifié par ses coordonnées, qui peuvent être par exemple l'indice de la ligne sur laquelle le segment se trouve ainsi que l'indice de la colonne de départ du segment. On affecte également à un tel segment, outre ses coordonnées, une longueur qui peut être exprimée en nombre de pixels compris dans le segment considéré. On affecte également à ce segment un identifiant de type, c'est-à-dire soit un identifiant de type maxima soit un identifiant de type minima dans l'exemple considéré ici. Un tel segment S est ainsi illustré à la figure 1.

Ce segment S a donc pour coordonnées (i, j), pour longueur 3, et pour type maxima, par exemple.

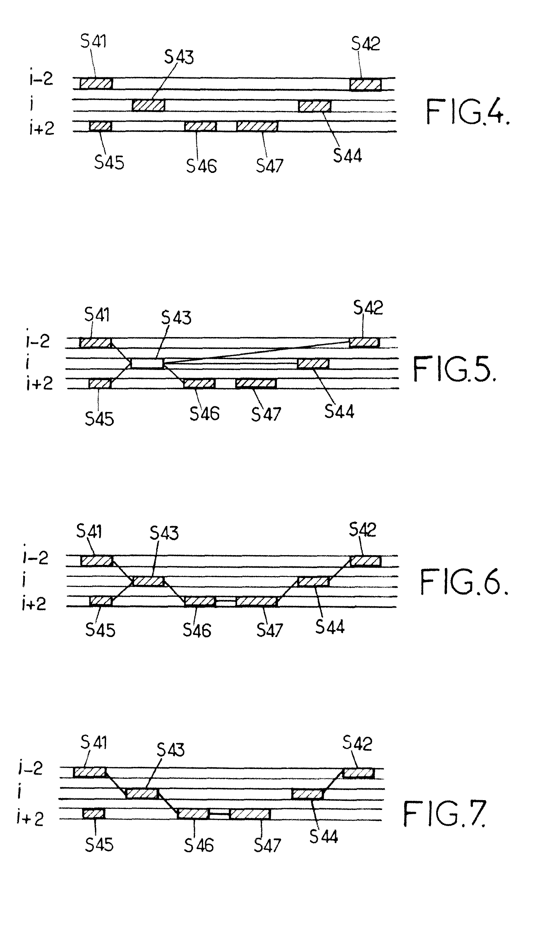

La figure 4 illustre un ensemble de segments obtenu selon un procédé de traitement d'image dans un mode de réalisation de la présente invention, sur cinq lignes d'indice compris entre i-2 et i+2. Les lignes d'indice i-2, i et i+2 sont des lignes de pixels valorisées. Des segments S41 et S42 ont été détectés sur la ligne d'indice i-2, des segments S43 et S44 ont été détectés sur la ligne d'indice i et des segments S45, S46 et S47 ont été détectés sur la ligne d'indice i+2.

Les figures 5, 6 et 7 illustrent respectivement des étapes mises en oeuvre pour construire un graphe de segments selon un mode de réalisation de la présente invention et le simplifier. Ainsi, dans l'exemple présent, on est ensuite en mesure d'obtenir un ou plusieurs graphes connexes des maxima.

Un segment détecté possède potentiellement au plus 6 voisins directs de même type, au sens de la présente invention, sur les lignes d'indice i-2, i et i+2. Il peut en effet avoir trois voisins d'un côté et trois voisins de l'autre côté. La figure 5 illustre les voisins possibles du segment S43 dans le contexte tel qu'illustré à la figure 4. Ainsi le segment S43 a pour voisins les segments S41, S42, S44, S45 et S46.

Pour construire le graphe de segments dans un mode de réalisation de la présente invention, on prend en compte les voisins les plus proches au sens de la distance euclidienne calculée entre les extrémités les plus proches des deux segments considérés. Ainsi, en reliant le segment S43 à ses plus proches voisins, on construit un graphe tel qu'illustré à la figure 6. Lorsque le segment S43 est à égale distance de deux segments les plus proches, ces deux segments sont reliés à S43. Tel est le cas pour les segments S41 et S45.

Selon une construction de graphe selon un mode de réalisation de la présente invention, les liaisons entre les différents segments sont bidirectionnelles.

On peut prévoir d'utiliser une valeur seuil d'adaptation $d_{seuil}$ pour éviter de relier deux segments qui sont trop éloignés et pour fournir une détermination de valeurs par interpolation qui est fiable.

On peut ainsi introduire une condition que doit vérifier la distance entre deux segments S1 et S2 selon l'équation suivante :

$$D(S1, S2) < \min (L1 + d_{seuil}, L2 + d_{seuil})$$

où L1 et L2 sont les longueurs respectives des segments S1 et S2.

Dans un mode de réalisation de la présente invention, la valeur $d_{seuil}$ est égale à 2 pixels.

On peut prévoir de stocker dans le segment lui-même les liaisons de ce dernier avec ses voisins les plus proches tels que définis ci-avant, sous la forme de pointeurs sur lesdits voisins les plus proches.

En général, de par la nature même des extrema locaux qui sont relatifs à une structure fine dans l'image, un segment a en fait au plus quatre segments voisins les plus proches, deux de chaque côté, tel que cela est illustré en figure 6.

La figure 7 illustre le graphe de la figure 6 après simplification. En effet, dans un mode de réalisation de la présente invention, le graphe obtenu à l'issue de l'étape de la recherche des segments les plus proches tel que cela est décrit ci-avant, est simplifié par application d'un des algorithmes de parcours de graphe, bien connus de l'homme du métier.

De préférence, cette étape de simplification permet de supprimer certaines liaisons et peut alors aboutir à une pluralité de sous graphes.

On peut à cet effet, par exemple, prévoir de supprimer des liaisons de manière à privilégier des sous-graphes ayant chacun une direction prédominante. Il est préférable également de supprimer les liaisons qui ont été établies de manière erronée.

Les graphes ne comportant qu'un seul segment ou comportant plusieurs segments qui sont sur une seule ligne sont de préférence supprimés. Un segment peut être relié à un autre segment selon 6 directions différentes qui peuvent être identifiées comme étant les directions Nord Ouest, Ouest, Sud Ouest, Nord Est, Est, Sud Est. Lors d'un parcours en profondeur d'un graphe, la direction d'entrée correspond à celle par laquelle on accède au segment, le segment de départ du chemin du graphe n'ayant de ce fait pas de direction d'entrée associée. Puis, les directions de sorties correspondent à toutes les liaisons du segment sauf la direction d'entrée.

Dans ce contexte, l'étape de simplification de graphe selon un mode de réalisation de la présente invention inclut l'application d'une première règle de simplification consistant à supprimer deux liaisons de sorties lorsqu'elles sont situés sur le même côté du segment considéré.

Cette première règle de simplification permet de ne pas relier à tort des structures potentiellement différentes, c'est-à-dire des sous graphes du graphe en cours de simplification.

L'étape de simplification de graphe selon un mode de réalisation de la présente invention inclut également l'application d'une seconde règle de simplification qui consiste à supprimer une liaison de sortie lorsqu'elle est située du même côté que la liaison d'entrée d'un segment considéré.

Cette seconde règle de simplification permet de ne conserver que des structures étirées et non pas des structures en zig-zag.

Les sous-graphes obtenus à l'issue de cette étape de simplification de graphe correspondent à des arbres à une seule branche. De longues structures rectilignes ou courbes peuvent être ainsi formées.

Il est possible de prévoir d'appliquer toute règle visant à simplifier le graphe et à augmenter la fiabilité des valeurs obtenues par application de l'étape d'interpolation à venir. On peut notamment prévoir d'attribuer un coefficient de pondération aux différentes liaisons. Un tel coefficient pourrait alors être déterminé par exemple sur la base d'une valeur moyenne d'intensité lumineuse des segments.

La figure 8 illustre une étape d'interpolation de valeurs de pixels selon un mode de réalisation de la présente invention. Cette étape d'interpolation est l'étape à l'issue de laquelle sont déterminées des valeurs à associer à une partie aux moins des pixels des lignes de pixels à valoriser.

Dans un mode de réalisation de la présente invention, cette étape d'interpolation est réalisée lors d'un chemin en avant, c'est à dire de l'ouest vers l'est de chacune des branches des sous graphes obtenues à l'issue de l'étape de simplification de graphe.

Deux segments, S1 sur la ligne i-1 et S2 sur la ligne i+1, de longueurs respectives L1 et L2, sont reliés dans un sous graphe. Le segment S1 a pour ordonnée d'extrémité de départ $Y_{start1}$ et pour ordonnées d'extrémité de fin $Y_{end1}$. Le segment S2 a pour ordonnée d'extrémité de départ $Y_{start1}$ et pour ordonnée d'extrémité de fin $Y_{end1}$.

Par interpolation des valeurs des pixels de ces deux segments, on obtient des valeurs à associer à un segment à interpoler Sint de la ligne de pixels d'indice i, qui est une ligne de pixels à valoriser. Ce segment Sint a pour ordonnées d'extrémité de départ et de fin respectivement $Y_{startInt}$ et $Y_{endInt}$ qui vérifient les équations suivantes :

$$Y_{startInt} = Y_{start1} + \left| \frac{Y_{start2} - Y_{start1}}{2} \right|$$

et

$$Y_{endInt} = Y_{end1} + \left| \frac{Y_{end2} - Y_{end1}}{2} \right|$$

Puis, on détermine les valeurs respectives à associer aux différents pixels du segment à interpoler de la ligne i en appliquant l'équation suivante :

$$val(P(i,j)) = \frac{1}{2} val\left(P\left(i-1, Y_{start1} + E\left(\frac{jxL_1}{L_{Int}}\right)\right) + \frac{1}{2} val\left(P\left(i+1, Y_{start2} + E\left(\frac{jxL_2}{L_{Int}}\right)\right)\right.$$

où j est compris entre $Y_{startInt}$ et $Y_{endInt}$, les ordonnées des pixels situés aux extrémités du segment à interpoler ;
où la fonction E renvoie l'entier le plus proche de son argument ; et
où $L_{Int}$ est la longueur du segment à interpoler sur la ligne à valoriser d'indice i.
$L_{Int}$ vérifie donc l'équation suivante :

$$L_{Int} = Y_{endInt} - Y_{startInt} + 1$$

La figure 9 illustre dans le contexte des figures 5-7, les segments interpolés obtenues par application de l'étape d'interpolation décrite ci-dessus en référence à la figure 8. On obtient ainsi des valeurs respectives à associer aux pixels des segments 91 sur la base d'une interpolation des valeurs des pixels des segments S41 et S43, des valeurs respectives à associer aux pixels des segments 92 sur la base d'une interpolation des valeurs des pixels des segments S43 et S43, des valeurs respectives à associer aux pixels des segments 93 sur la base d'une interpolation des valeurs des pixels des segments S42 et S44.

La figure 10 illustre une étape d'interpolation complémentaire selon un mode de réalisation de la présente invention. Afin de garantir une meilleure continuité des valeurs de pixels autour des zones fines de contraste telles que détectées et corrigées par interpolation ci-avant, l'étape d'interpolation telle que décrite ci-avant peut être appliquée à nouveau dans une étape d'interpolation complémentaire sur un certain nombres de pixels qui précèdent et qui suivent le segment pour lequel on vient de procéder à une interpolation comme illustré en figure 8 et décrite en référence à cette figure dans une section précédente.

La figure 11 illustre un dispositif de traitement d'image selon un mode de réalisation de la présente invention.

**Revendications**

1. Procédé de traitement d'une image suivant au moins une première et une seconde dimension, comprenant L lignes de pixels, où L est un nombre supérieur ou égal à 5, et un nombre C de colonnes de pixels, un pixel étant repéré par une abscisse et une ordonnée dans un référentiel de pixels de l'image;

l'image comprenant des lignes de pixels valorisées, aux pixels de laquelle sont associés des valeurs d'intensité lumineuse, alternées avec des lignes de pixels à valoriser, aux pixels de laquelle des valeurs d'intensité lumineuse sont à associer,

le procédé comprenant les étapes suivantes:

/a/ sur chaque ligne de pixels valorisée courante:

- sélectionner des pixels qui vérifient une règle de sélection basée, d'une part, sur des valeurs d'intensité lumineuse associées aux pixels de la ligne de pixels valorisée courante, et d'autre part, sur des valeurs d'intensité lumineuse associées aux pixels de la ligne de pixels valorisée précédente, et/ou de la ligne de pixels valorisée suivante dans l'image ;
- détecter des segments de pixels, chaque segment correspondant à un groupe de pixels sélectionnés contigus, sinon à un unique pixel sélectionné disjoint d'autres pixels éventuellement sélectionnés;

/b/ obtenir un ensemble de segments relatif à l'image en cours de traitement ;
/c/ dans ledit ensemble de segments, créer un graphe de segments en reliant entre eux les segments selon une règle de liaison ;
/d/ déterminer des valeurs d'intensité lumineuse respectives à associer à au moins une partie des pixels des lignes à valoriser par interpolation des valeurs d'intensité lumineuse associées aux pixels des segments du graphe selon un chemin dudit graphe.

2. Procédé de traitement d'image selon la revendication 1, dans lequel la règle de sélection sélectionne des pixels correspondant à des maxima d'intensité lumineuse.

3. Procédé de traitement d'image selon la revendication 2, dans lequel la règle de sélection de pixels sélectionne un pixel courant auquel est associée une valeur d'intensité lumineuse qui est supérieure à la valeur maximum parmi un ensemble de valeurs comprenant :

- une première valeur correspondant à la somme de la valeur d'intensité lumineuse associée à un pixel appartenant à la même colonne de pixels que ledit pixel courant et à la ligne de pixels valorisée précédant la ligne valorisée du pixel courant avec une première valeur seuil ; et
- une seconde valeur correspondant à la somme de la valeur d'intensité lumineuse associée à un pixel appartenant à la même colonne de pixels que le pixel courant et à la ligne de pixels valorisée suivant la ligne valorisée du pixel courant avec une seconde valeur seuil.

4. Procédé de traitement d'image selon l'une quelconque des revendications précédentes, dans lequel la règle de sélection sélectionne des pixels correspondant à des minima d'intensité lumineuse.

5. Procédé de traitement d'image selon la revendication 4, dans lequel la règle de sélection de pixels sélectionne un pixel auquel est associée une valeur d'intensité lumineuse qui est inférieure à la valeur minimum parmi un ensemble de valeurs comprenant :

- une première valeur correspondant à la différence de la valeur d'intensité lumineuse associée à un pixel appartenant à la même colonne de pixels que le pixel courant et à la ligne de pixels valorisée précédant la ligne valorisée du pixel courant avec une première valeur seuil ; et
- une seconde valeur correspondant à la différence de la valeur d'intensité lumineuse associée à un pixel appartenant à la même colonne de pixels que le pixel courant et à la ligne de pixels valorisée suivant la ligne valorisée du pixel courant avec une seconde valeur seuil.

6. Procédé de traitement d'image selon l'une quelconque des revendications précédentes, dans lequel la règle de liaison pour créer un graphe de segments lie un premier segment (S1) et un second segment (S2) si l'équation suivante est vérifiée :

$$D(S1, S2) < min (L1 + d_{seuil}, L2 + d_{seuil})$$

où D(S1,S2) correspond à la distance euclidienne entre les extrémités les plus proche des premier et second segments ;

où L1 et L2 correspondent aux longueurs respectives des premier et second segments ; et

où d$_{seuil}$ correspond à une valeur seuil de distance.

7. Procédé de traitement d'image selon l'une quelconque des revendications précédentes, dans lequel, entre les étapes /c/ et /d/, on applique une règle de simplification de graphe.

8. Procédé de traitement d'image selon la revendication 6, dans lequel la règle de simplification de graphe comprend une étape de suppression de deux liaisons de sortie d'un segment lorsque lesdites deux liaisons de sortie sont situées sur le même côté dudit segment.

9. Procédé de traitement d'image selon la revendication 7 ou 8, dans lequel la règle de simplification comprend une étape de suppression d'une liaison de sortie d'un segment lorsque ladite liaison de sortie est située sur le même côté dudit segment qu'une liaison d'entrée.

10. Procédé de traitement d'image selon l'une quelconque des revendications précédentes, dans lequel l'étape /d/ est réalisée en mettant en oeuvre les étapes suivantes :

/1/ parcourir le graphe et déterminer un premier segment (S1) et un second segment (S2) du graphe situés sur des première et seconde lignes de pixels valorisées successives dans l'image ;

/2/ déterminer la longueur d'un segment à interpoler (S$_{int}$), sur la base des premier et second segments, sur la ligne de pixels à valoriser comprise entre la première et la seconde ligne de pixels valorisée ; et

/3/ déterminer des valeurs respectives à associer aux pixels du segment à interpoler par interpolations respectives des valeurs d'intensité lumineuse associées aux pixels des premier et second segments.

11. Procédé de traitement d'image selon la revendication 10, dans lequel, à l'étape /2/, on détermine l'ordonnée Y$_{startInt}$ du pixel de début et l'ordonnée Y$_{endInt}$ du pixel de fin du segment à interpoler (Sint) selon les équations respectivement suivantes :

$$Y_{startInt} = Y_{start1} + \left| \frac{Y_{start2} - Y_{start1}}{2} \right|$$

et

$$Y_{endInt} = Y_{end1} + \left| \frac{Y_{end2} - Y_{end1}}{2} \right|$$

où Y$_{start1}$, Y$_{start2}$, Y$_{end1}$ et Y$_{end2}$ sont respectivement les ordonnées des pixels de début et de fin des premier et second segments (S1, S2).

12. Procédé de traitement d'image selon la revendication 11, dans lequel la valeur d'intensité lumineuse déterminée par interpolation d'un pixel P(i,j) du segment à interpoler sur la ligne à valoriser d'indice i vérifie l'équation suivante :

$$val(P(i,j)) = \frac{1}{2} val\left(P\left(i-1, Y_{start1} + E\left(\frac{jxL_1}{L_{Int}}\right)\right) + \frac{1}{2} val\left(P\left(i+1, Y_{start2} + E\left(\frac{jxL_2}{L_{Int}}\right)\right)$$

où j est compris entre Y$_{startInt}$ et Y$_{endInt}$;

où la fonction E renvoie l'entier le plus proche du nombre passé en argument ; et où L$_{Int}$ est la longueur du segment à interpoler sur la ligne de pixels à valoriser d'indice i.

**13.** Procédé de traitement d'image selon l'une des revendications 10 à 12, dans lequel p pixels précédant le segment à interpoler et s pixels suivants le segment à interpoler sont également interpolés sur la base des valeurs des p pixels précédant les premier et second segments et des s pixels suivant les premier et second segments sur les lignes de pixels valorisées des premier et second segments respectivement.

**14.** Dispositif (81) de traitement d'image de traitement d'une image comprenant des moyens adaptés pour mettre en oeuvre les étapes d'un procédé de traitement d'image selon l'une quelconque des revendications précédentes.

**15.** Programme d'ordinateur destiné à être installé dans un dispositif de traitement d'image (81) selon la revendication 14, comprenant des instructions aptes à mettre en oeuvre le procédé selon l'une quelconque des revendications 1 à 13, lors d'une exécution du programme par des moyens de traitement du dispositif de traitement d'image.

## FIG.1.

$j$

$Y$

$i$

P(i,j)

S

100

$X$

## FIG.2.

A CHAQUE LIGNE VALORISÉE
— SÉLECTION DE PIXELS
— DÉTECTION DE SEGMENTS

201

CRÉATION D'UN GRAPHE

202

VALEURS DE PIXELS DES LIGNES
À VOLORISER OBTENUES PAR
INTERPOLATION

203

FIG.3.

FIG.8.

FIG.9.

FIG.10.

FIG.4.

FIG.5.

FIG.6.

FIG.7.

**Office européen des brevets**

# RAPPORT DE RECHERCHE EUROPEENNE

Numéro de la demande

EP 07 11 6400

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,P | ROUSSEL J, BERTOLINO P, NICOLAS M: "Improvement of Conventional Deinterlacing Methods with Extrema Detection and Interpolation" LNCS - SPRINGER LECTURE NOTES IN COMPUTER SCIENCE, ACIVS 2006, vol. 4179, 18 septembre 2006 (2006-09-18), - 21 septembre 2006 (2006-09-21) pages 384-395, XP002415852 Berlin, Heidelberg * le document en entier * ----- | 1-15 | INV. H04N7/01 G06T3/40 |
| A | HAAN DE G ET AL: "Deinterlacing - An overview" PROCEEDINGS OF THE IEEE, IEEE. NEW YORK, US, vol. 86, no. 9, 1 septembre 1998 (1998-09-01), pages 1839-1857, XP011044084 ISSN: 0018-9219 * page 1843 - page 1845 * ----- | 1-15 | |
| A | CHANGMING SUN: "De-interlacing of video images using a shortest path technique" IEEE TRANSACTIONS ON CONSUMER ELECTRONICS, IEEE SERVICE CENTER, NEW YORK, NY, US, vol. 47, no. 2, mai 2001 (2001-05), pages 225-230, XP002188607 ISSN: 0098-3063 * page 226 - page 228 * ----- -/-- | 1-15 | DOMAINES TECHNIQUES RECHERCHES (IPC) H04N G06T |

Le présent rapport a été établi pour toutes les revendications

| Lieu de la recherche | Date d'achèvement de la recherche | Examinateur |
|---|---|---|
| Munich | 2 janvier 2008 | Borotschnig, Hermann |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**Office européen des brevets**

**RAPPORT DE RECHERCHE EUROPEENNE**

Numéro de la demande

EP 07 11 6400

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | BOVYRIN A V ED - INSTITUTE OF ELECTRICAL AND ELECTRONICS ENGINEERS: "Fast extraction of scene structure based on gradient runs analysis" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, vol. VOL. 2 OF 3, 22 septembre 2002 (2002-09-22), pages 757-760, XP010607434 ISBN: 0-7803-7622-6 * page 757 - page 759; figures 1-7 * ----- | 1-15 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 2 janvier 2008 | Borotschnig, Hermann |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 901 555 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7023487 B